# EUROPEAN PATENT SPECIFICATION

(11) **EP 4 422 406 B1**
(45) Date of publication and mention of the grant of the patent: **14.01.2026**
(21) Application number: 22817093.2
(22) Date of filing: 25.10.2022
(51) Int. Cl.: A01N 59/20, A01P 1/00, A01P 3/00

(54) **FORMULATION FOR DELIVERING COPPER IN AGRICULTURAL APPLICATIONS**
FORMULIERUNG ZUR ABGABE VON KUPFER IN LANDWIRTSCHAFTLICHEN ANWENDUNGEN
FORMULATION POUR LA FOURNITURE DE CUIVRE DANS DES APPLICATIONS AGRICOLES

(30) Priority: 26.10.2021 EP 21382965
(43) Date of publication of application: 04.09.2024
(73) Proprietor: Fundació Eurecat, 08290 Cerdanyola del Vallès (ES)
(72) Inventor: TYLKOWSKI, Bartosz, 43007 Tarragona (ES); MONTORNÉS DAURA, Josep Maria, 43007 Tarragona (ES); OLKIEWICZ, Magdalena Anna, 43007 Tarragona (ES); SÁNCHEZ SÁNCHEZ, Elena, 08015 Barcelona (ES); ORTEGA RIOJA, Paula, 08960 Sant Just Desvern (ES)
(74) Representative: ZBM Patents - Zea, Barlocci & Markvardsen
(86) International application number: PCT/EP2022/079805
(87) International publication number: WO 2023/072943

(56) References cited:
- CN-A- 102 286 422
- VINCEKOVIC MARKO ET AL: "Encapsulation of Biological and Chemical Agents for Plant Nutrition and Protection: Chitosan/Alginate Microcapsules Loaded with Copper Cations and Trichoderma viride", JOURNAL OF AGRICULTURAL AND FOOD CHEMISTRY, vol. 64, no. 43, 2 November 2016 (2016-11-02), US, pages 8073 - 8083, XP55910334, ISSN: 0021-8561, Retrieved from the Internet <URL:https://pubs.acs.org/doi/pdf/10.1021/acs.jafc.6b02879> DOI: 10.1021/acs.jafc.6b02879
- VINCEKOVIC MARKO ET AL: "Supporting Information for: Encapsulation of Biological and Chemical Agents for Plant Nutrition and Protection: Chitosan/Alginate Microcapsules Loaded with Copper Cations and Trichoderma viride", J. AGRIC. FOOD CHEM. SUPPORTING INFORMATION, 7 October 2016 (2016-10-07), pages 1 - 6, XP55910014, Retrieved from the Internet <URL:https://pubs.acs.org/doi/suppl/10.1021/acs.jafc.6b02879/suppl_file/jf6b02879_si_001.pdf> [retrieved on 20220406]
- VINCEKOVIC MARKO ET AL: "Encapsulation of Biological and Chemical Agents for Plant Nutrition and Protection: Chitosan/Alginate Microcapsules Loaded with Copper Cations and Trichoderma viride", vol. 64, no. 43, 2 November 2016 (2016-11-02), US, pages 8073 - 8083, XP055910334, ISSN: 0021-8561, Retrieved from the Internet <URL:https://pubs.acs.org/doi/pdf/10.1021/acs.jafc.6b02879> DOI: 10.1021/acs.jafc.6b02879
- VINCEKOVIC MARKO ET AL: "Supporting Information for: Encapsulation of Biological and Chemical Agents for Plant Nutrition and Protection: Chitosan/Alginate Microcapsules Loaded with Copper Cations and Trichoderma viride", J. AGRIC. FOOD CHEM. SUPPORTING INFORMATION, 7 October 2016 (2016-10-07), pages 1 - 6, XP055910014, Retrieved from the Internet <URL:https://pubs.acs.org/doi/suppl/10.1021/acs.jafc.6b02879/suppl_file/jf6b02879_si_001.pdf> [retrieved on 20220406]

## Description

The authors gratefully acknowledge financial support for COPPEREPLACE project, which has received funding from (grant agreement SOE4/P1/E1000) FEDER funds through INTERREG- SUDOE program.

This application claims the benefit of the European Patent Application 21382965.8 filed on 26.10.2021.

### Technical Field

The present invention relates to the field of products for agricultural use. In particular, it relates to environmentally sustainable organic copper formulations and to a process for their preparation. The formulations of the invention are intended to prevent or reduce the damage of diseases caused by pathogenic fungi or bacteria as well as stimulate the natural defenses in agricultural crops.

### Background Art

Copper based preparations, such as for example water-insoluble copper salts including sulfates, carbonates, hydroxides, and oxalates, have been used for over 200 years to control fungi and bacterial diseases in cultivated plants. Downy mildew is one of the most destructive of all grapevine diseases which occurs throughout the world. This disease is caused by *Plasmopara viticola* and can be conveniently treated by copper formulations.

Copper is an essential element for plant growth occurring naturally in soils in concentrations between 5 and 30 mg/kg, although exceptionally in soils developed on some type of basic parent material may reach values between 100-250 mg/kg.

However, copper used as a plant protection product may have long-term consequences due to its accumulation in the soil. In fact, the historical use of copper-based fungicides in vineyards has led to important increases of copper concentrations in soils, because it tends to accumulate in the upper soil layers due to its low mobility, after rainfall washing removal from the vines, deposition of the senescent leaves or accidental spills.

The continuous increase of copper concentrations in soils of vineyards causes a growing concern because high concentrations of copper may cause not only negative impacts on soils organism functions and diversity, but also on vineyards surrounding ecosystems. Indeed, environmental values of copper commonly found in soils under inputs of cooper-based fungicides are shown to be toxic not only to non-target soil organisms like worms and microbial communities, but also to aquatic organisms such as *Vibrio fischeri* and *Daphnia magna.*

In the past, regular inputs of copper up to 30 kg/ha (per every 5 years) were frequently attained and allowed by legal regulations. After each field application, the residue typically accumulated in the upper 15 cm of soil, given the high affinity of copper with the soil organic matter, that contains several reactive groups, like carboxylic and phenolic groups, which can complex copper cations, after deprotonation, reducing its mobility in soils.

Due to the environmental problems related to the accumulation of cooper in soils and potential contamination of the aquatic environment, since 2007, the use of copper has been limited by European regulation. Nowadays, the use of copper in the European vineyard is limited to a maximum of 28 kg copper/ha over 7 years.

When assessing the toxicity of copper and its impacts on the environment, not only its total concentration in soils should be considered, but also its bioavailability and mobility, which are both strongly affected by the soil properties and ageing processes. The toxicity of copper is also dependent on the chemical species present in soil solution (i.e. free and complexed). The mobility of copper influences its ability to migrate through the soil profile up to other environmental compartments, for example, reaching water masses more easily.

Alternative copper formulations with a lower metallic content have been developed and are available in the market. However, they have not been proven to be as effective as the traditional ones, especially at low concentrations. It has to be taken into account that since copper is active only in tissues where is applied (i.e. it is a non-systemic substance), in areas where disease incidence is high, weekly copper applications are made by growers increasing the risk of exceeding the fixed copper threshold.

Even if several R&D projects have been developed in recent years with the aim of replacing or giving alternatives to the use of copper salts in viticulture, this problem is still currently unsolved, being one of the most relevant challenges for the sustainable production of wine, for which synthetic active substances cannot be part of the solution.

Vincekovic et al, Journal of Agricultural and Food Chemistry 2016, vol. 64, no. 43, pages 8073-8083, disclose chitosan/alginate microcapsules intended for plant nutrition and protection which are loaded with copper cations or with copper cations and *Trichoderma viride* spores. The microcapsules are prepared by ionic gelation in two stages. The first stage comprises the formation of core microcapsules having a diameter of 2 mm or 0.45 mm loaded with copper cations or *T. viride* and cooper. The second stage includes the coating of core microcapsules by chitosan.

CN102286422 discloses sphere-in-sphere composite microcapsules consisting of an inner microsphere (particle size 50-600 µm) and an outer microsphere (particle size 100-3000 µm) made of sodium alginate. The microcapsule is formed by dripping sodium alginate into multivalent cation solution (calcium, zinc, barium, copper, magnesium, iron, manganese) and performing gelatinization treatment twice, wherein the two gel microspheres may contain two different kinds of cells. The microcapsules can be coated by a cationic polymer solution such as a chitosan.

Therefore, there is still a need to provide alternative copper containing agricultural products, which while maintaining high efficacy are capable to reduce the copper deposited in the soils being thus environmentally sustainable.

### Summary of Invention

The present inventors have developed a new aqueous formulation for the delivery of copper to agricultural crops, which comprises non-toxic and non-contaminant polymeric materials, and cooper cations which are present both in solution and forming part of polymeric microcapsules. The liquid formulation of the invention can be conveniently applied as a spray to the desired part of the plant, in particular the leaves. Thanks to the particular configuration of the formulation, comprising cooper cations both in solution and in the microcapsules wall, a controlled and sustained release of cooper over time is obtained.

In particular, the formulation of the invention comprises an aqueous medium, a cationic polymer and copper cations dissolved in the medium, and copper-containing polymeric microcapsules of specific micrometric size which are dispersed in the same medium. The wall of the polymeric microcapsules comprises a network formed by an anionic polymer and further copper cations, wherein the cooper cations interact electrostatically with the anionic groups contained in the anionic polymer.

On the other hand, the copper cations present in solution may interact with amino groups and hydroxyl groups contained in the cationic polymer forming polymer-metal complexes, as well as with carboxylate groups or sulfonate groups of the anionic polymer by ionic bonds. Finally, the cationic groups of the cationic polymer may also interact electrostatically with the anionic groups of the anionic polymer which is present in the microcapsules wall.

As a result of all the above interactions by which the microcapsules stabilize the solution and *vice versa,* the formulation of the invention is capable of enhancing the copper deposition on the leave as well as having an improved rain resistance.

As illustrated in the examples herein, the formulations of the invention showed statistically significant higher copper deposition in comparison with a traditional cooper formulation. Additionally, the formulations also showed particularly good spreadability on the leave. It has been demonstrated that after evaporation of the formulation's water content, the size of the dried droplet ranged from 0.02 to 2.5 mm measured by means of optical microscopy, and that this size was not dependent on the direction of the spraying system used to apply the formulation to the plant. This fact has the advantage that the formulation of the invention containing copper cannot be easily washed away by the rain. As a consequence, practically all copper contained in the formulation of the invention may be effectively delivered to the plant and exert its beneficial activity, and at the same time the amount of copper which ends up on the soil and contaminates is greatly minimised.

A further advantage of the formulation of the invention is that due to the specific micrometric size of the microcapsules comprising copper cations it allows a homogeneous distribution of cooper on the application site.

Moreover, if desired, the microcapsules of the formulation of the invention may encapsulate further agriculturally active agents of interest, which can also be delivered to the plant in a controlled way.

Therefore, a first aspect of the invention relates to a formulation comprising:
a) an aqueous medium in the pH range from 4.0 to 6.5;
b) a cationic polymer dissolved in the aqueous medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium; and
d) microcapsules dispersed in the aqueous medium, wherein the microcapsule wall forms a network which comprises an anionic polymer and a plurality of copper cations, the anionic polymer comprises a plurality of carboxylate groups or sulfonate groups, and the microcapsule has a particle size distribution D90 from 2 to 80 µm;
wherein:
the cationic polymer is bonded to the anionic polymer by ionic bonds formed between quaternary ammonium groups of the cationic polymer and carboxylate or sulfonate groups of the anionic polymer,
the copper cations dissolved in the aqueous medium are coordinated to amino groups and hydroxyl groups of the cationic polymer,
the copper cations dissolved in the aqueous medium are bonded to the anionic polymer by ionic bonds with the carboxylate groups or sulfonate groups of the anionic polymer, and
the copper cations present in the microcapsule wall are bonded to the anionic polymer by ionic bonds formed between cooper cations and carboxylate groups or sulfonate groups of the anionic polymer.

The microcapsules of the invention may be generally prepared by ionic gelation and polyelectrolyte complexation. Thus, a second aspect of the invention relates to a process for the preparation of the copper organic formulation as defined above, which comprises:
a) providing an aqueous solution comprising a polymer which comprises a plurality of carboxylic acid groups or sulfonic acid groups, wherein in solution the polymer is in anionic form and comprises a plurality of carboxylate groups or sulfonate groups;

ii) providing an aqueous solution of a copper salt, wherein in solution the copper salt is in ionic form;
iii) providing an aqueous solution in the pH range from 3.0 to 6.5 comprising apolymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
   wherein steps i), ii) and iii) are carried out in any order;
iv) spraying the solution of step i) onto the solution of step ii) to obtain a mixture comprising microcapsules having a particle size distribution D90 from 2 to 80 µm, and wherein the microcapsule wall forms a network which comprises the anionic polymer and a plurality of copper cations;
v) adding the solution of step iii) onto the mixture of step iv) to obtain a formulation in which the microcapsules are dispersed; and
vi) if needed, adjusting the pH of the formulation until the pH is in the range from 4.0 to 6.5.

A third aspect of the invention relates to the use of the formulation as defined herein as a delivery system of copper in agricultural applications.

A fourth aspect of the invention relates to the use formulation as defined herein for preventing or reducing the damage of diseases caused by pathogenic fungi or bacteria in agricultural crops.

### Brief Description of Drawings

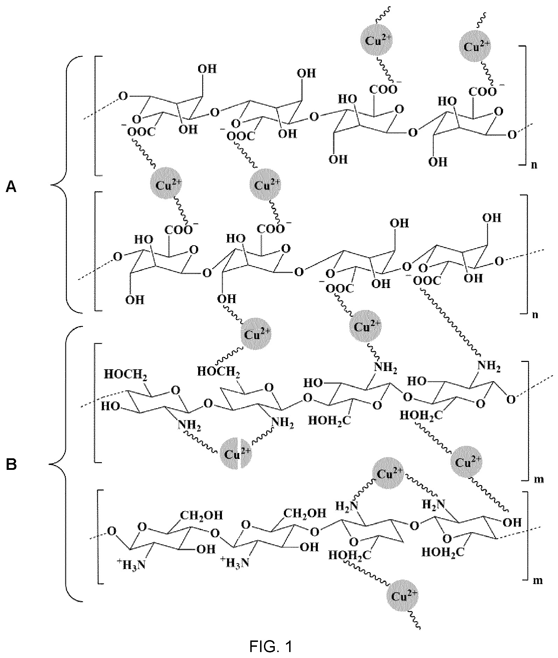

FIG. 1 is a schematic view representing an embodiment of the formulation of the invention and the interactions between the different components. In this embodiment the cationic polymer is chitosan, and the anionic polymer is alginate (A: alginate capsule wall; B: chitosan medium). As can be seen the copper cations present in the chitosan medium interact with the hydroxyl groups and amino groups of the chitosan, and the hydroxyl groups and carboxylate groups of the alginate present in the microcapsule wall. The copper cations present in the microcapsule wall form a network with the alginate, and, finally, carboxylate groups of alginate also interact with ammonium groups of chitosan.

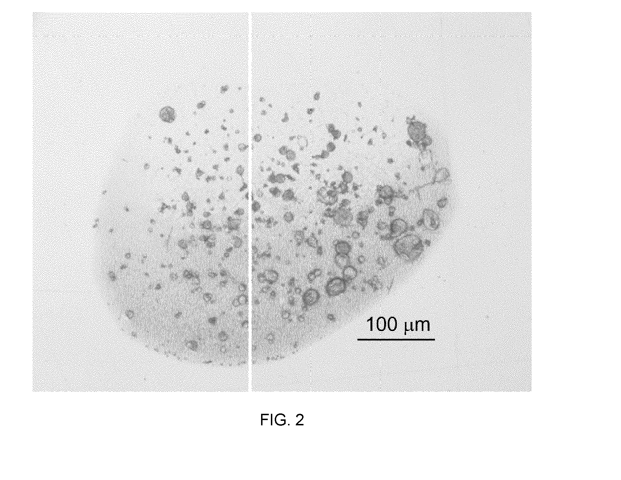

FIG. 2 shows an optical micrograph of a dried droplet obtained after spraying vertically to a Petri dish the formulation according to example 5 as disclosed in the examples.

### Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

The term "about" or "around" as used herein refers to a range of values ± 10% of a specified value. For example, the expression "about 10" or "around 10" includes ± 10% of 10, i.e. from 9 to 11.

As mentioned above, a first aspect of the invention relates to a formulation comprising:
a) an aqueous medium in the pH range from 4.0 to 6.5, b) a cationic polymer dissolved in the medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium; and d) microcapsules dispersed in the aqueous medium, wherein the microcapsule wall forms a network which comprises an anionic polymer and a plurality of copper cations, the anionic polymer comprises a plurality of carboxylate groups or sulfonate groups, and the microcapsule has a particle size distribution D90 from 2 to 80 µm;
wherein: the cationic polymer is bonded to the anionic polymer by ionic bonds formed between quaternary ammonium groups of the cationic polymer and carboxylate or sulfonate groups of the anionic polymer, the copper cations are coordinated to amino groups and hydroxyl groups of the cationic polymer, the copper cations are bonded to the anionic polymer by ionic bonds with the carboxylate groups or sulfonate groups of the anionic polymer, and the copper cations present in the microcapsule wall are bonded to the anionic polymer by ionic bonds formed between cooper cations and carboxylate groups or sulfonate groups of the anionic polymer.

The pH of the aqueous medium is from 4.0 to 6.5. According to one embodiment, optionally in combination with one or more features of the various embodiments described above or below, the pH of the aqueous medium is from 4.0 to 6.3.

In another embodiment, optionally in combination with one or more features of the various embodiments described above or below, the pH of the formulation is below the pH at which the cationic polymer precipitates, more particularly at a pH which is 0.5 below the pH value at which cationic polymer precipitates. This specific pH value depends on the nature of the cationic polymer. In particular, when the cationic polymer is chitosan, the specific pH at which it precipitates depends on its deacetylation degree (DD), distribution of the acetyl groups, molecular weight, and origin (e.g. crustacean, fungi or insect). For a given cationic polymer, the skilled person may easily determine the pH at which the cationic polymer precipitates by carrying out experiments at different pH values and visually observe at which pH the polymer precipitates.

At the pH of the formulation part of the amino groups of the cationic polymer are in ionic form as quaternary ammonium groups (-NH₃⁺) and part as amino groups (-NH₂). This has the advantage that the cooper cations in solution can coordinate to amino groups of the cationic polymer and the precipitation of the cationic polymer is avoided.

The formulation also comprises a plurality of copper cations dissolved in the aqueous medium. In an embodiment, optionally in combination with one or more features of the various embodiments described above or below, the cations are present in the form of a chloride, phosphate, carbonate, oxalate, or sulfate salt.

The formulation of the invention comprises a cationic polymer dissolved in the aqueous medium in a concentration from 0.0001 to 0.5% by weight with respect to the total weight of the formulation. This range of concentrations of the cationic polymer has the advantage that the resulting mixture shows adequate viscosity, such that the formulation is liquid and can be conveniently applied to the targeted crop for example in the form of a spray.

In one embodiment, optionally in combination with one or more features of the various embodiments described above or below, the concentration of the cationic polymer dissolved in the aqueous medium is from 0.05 to 0.5%, more particularly from 0.1 to 0.5%, by weight with respect to the total weight of the formulation.

### Cationic polymers

The term "cationic polymer" as used herein refers to a polymer carrying a net positive charge, in particularly comprising a plurality of quaternary ammonium groups. The cationic polymer is obtained when a polymer comprising a plurality of amino groups is placed in an acidic aqueous solution, and the amino groups are protonated. The cationic polymers used in the present invention also comprise a plurality of hydroxyl groups and amino groups which are not protonated.

In one embodiment, optionally in combination with one or more features of the various embodiments described above or below, the cationic polymer is soluble in water at pH from 3.0 to 6.5.

In another embodiment, optionally in combination with one or more features of the various embodiments described above or below, the cationic polymer is selected form the group consisting of chitosan, N,O-carboxymethyl-chitosan, N,O-glycolic-chitosan, poly-L-lysine, and a combination thereof. More particularly, the cationic polymer is chitosan.

Chitosan is a biodegradable and biocompatible linear polysaccharide derived from the N-deacetylation of chitin present in the shell of all crustaceans (crab, prawns, shrimp, spider crabs, lobsters, squid, and krill) and also in the cell wall of insects, worms and fungi. Chitosan has strong antibacterial properties as well as low toxicity. Chitosan is composed of randomly distributed β-(1-4)-linked D-glucosamine and N-acetyl-D-glucosamine units and has the following formula:

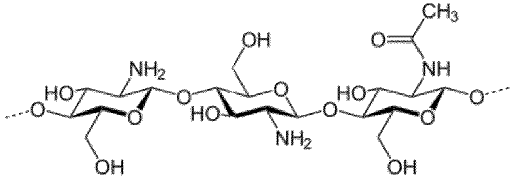

Chitosan is able to form a polyion complex with anionic polymers such as alginate through its quaternary ammonium groups. The degree of deacetylation (DD) of a given chitosan is the molar percentage of D-glucosamine units with respect to the total number of units (N-acetyl-D-glucosamine units and D-glucosamine units) constituting this chitosan. The degree of deacetylation allows distinguishing between chitin and chitosan. Typically, chitosan can have a degree of deacetylation from 55 to 70% (low deacetylation degree), from 70% to 85% (middle deacetylation degree), and from 85 to 95% (high deacetylation degree) or from 95 to100% (ultrahigh deacetylation degree).

The degree of deacetylation may be determined by different methods well-known in the art such as infrared spectroscopy (IR), near infrared spectroscopy (NIR), UV-spectrophotometry, first derivative UV-spectrophotometry (1DUVS), colloidal titration, linear potentiometric titration (LPT), enzymatic determination, nuclear magnetic resonance (NMR), ninhydrin test and circular dichroism measurements.

According to one embodiment, optionally in combination with one or more features of the various embodiments described above or below, the chitosan has a DD (expressed as mol%) in the range from 55 to 95% and more particularly in the range from 70 to 94%. Chitosan typically has an average molecular weight in the range of 10 to 800 kg/mol (kDa). Molecular weight may be determined by size exclusion chromatography, light scattering or by measuring the intrinsic viscosity of sonicated solutions.

In one embodiment, optionally in combination with one or more features of the various embodiments described above or below, the chitosan has an average molecular weight from 10 to 800 kg/mol, more particularly from 15 to 500 kg/mol, and even more particularly from 15 to 375 kg/mol.

According to one embodiment, optionally in combination with one or more features of the various embodiments described above or below, the chitosan has a viscosity from 1 to 500 mPa·s, more particularly from 15 to 100 mPa·s measured at 1 wt% aqueous solution of chitosan, pH 3, 20 °C, 20 rpm.

Examples of commercial chitosan derivatives which may be used in the formulation of the invention include crustacean chitosan from Sigma-Aldrich (ref:417963), crustacean chitosan from Aura Biotech (ref: C001), fungal chitosan from KitoZyme (ref: 104-19-03-V03) or insect chitosan from TEBRIO (Spain).

The formulation of the invention further comprises microcapsules dispersed in the aqueous medium. The term "microcapsule" as used herein refers to a physical entity generally spherical which comprises a wall which forms a network which comprises an anionic polymer such as alginate, and a plurality of copper cations. This network results from the ionic interactions between copper cations and carboxylate groups or sulfonate groups of the anionic polymer. In some embodiments, the microcapsule may comprise two differentiated phases: the wall or external phase, and the core, also referred to as nucleus or internal phase, which may comprise one or more active ingredients. When present, the core is encapsulated by the wall.

The microcapsules contained in the formulation have a particle size distribution D90 from 2 to 80 µm, in particular measured as defined herein. The term "D90" refers to the value of particle size distribution where at least 90% of the microparticles have a size lower than or equal to that value. A D90 from 2 to 80 µm means that 90% of the microcapsules have a diameter within this range, and 10% of the microcapsules have a diameter which is either below 2 µm or above 80 µm.

In one embodiment, optionally in combination with one or more features of the various embodiments described above or below, the microcapsule has a particle size distribution D90 from 2 to 75 µm, more particularly from 2 to 55 µm, and even more particularly from 2 to 35 µm.

The average size of the microcapsules can be measured using a "Image-ProPlus 5" or Image J software and the OM micrographs of the microcapsules. The size distribution can be measured by means of a HELOS BR supplied by Sympatec GmbH System Partikel Technik equipped with a R1 cuvette and a Helium-Neon Laser 5mW max output at 632.8 nm.

### Anionic polymers

The term "anionic polymer" as used herein refers to a polymer carrying a net negative charge, in particularly comprising a plurality of carboxylate or sulfonate groups. The anionic polymer is obtained when a polymer comprising a plurality of carboxylic acid or sulfonic acid groups is placed in an aqueous solution, in particular at about pH 4, and the carboxylic acid or sulfonic acid groups are deprotonated. The anionic polymer may additionally comprise other negatively charged species attached along the polymer chain.

In one embodiment, optionally in combination with one or more features of the various embodiments described above or below, the anionic polymer is soluble in water at pH above 4.

In one embodiment, optionally in combination with one or more features of the various embodiments described above or below, the anionic polymer is selected form the group consisting of alginate, carrageenan, gellan gum, carboxyl methyl cellulose, hyaluronic acid, and a combination thereof.

According to another embodiment, optionally in combination with one or more features of the various embodiments described above or below, the anionic polymer further comprises hydroxyl groups. This has the advantage that the copper cations present in the medium may also interact with the hydroxyl groups of the anionic polymer present in the microcapsule wall, thus stabilizing even more the capsules in the formulation.

In one embodiment, optionally in combination with one or more features of the various embodiments described above or below, the anionic polymer is alginate. And even more particularly, the anionic polymer is alginate, and the cationic polymer is chitosan.

### Alginate

Alginic acid is a biocompatible polysaccharide distributed widely in the cell walls of brown algae. When forming salts with metals such as sodium and calcium, it is referred to alginate. It is a linear copolymer with homopolymeric blocks of (1-4)-linked β-D-mannuronate (M) and its C-5 epimer α-L-guluronate (G) residues, respectively, covalently linked together in different sequences or blocks. The monomers may appear in homopolymeric blocks of consecutive G-residues (G-blocks), consecutive M-residues (M-blocks) or alternating M and G-residues (MG-blocks). Its chemical structure corresponds to the following formula:

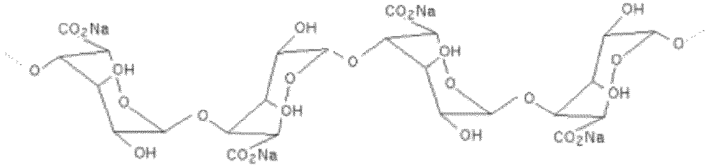

For the purposes of the invention alginic acid and alginate are used interchangeably.

Alginates may be characterized by its molecular weight (M_{w}) and the intrinsic viscosity of sonicated solutions.

In one embodiment, optionally in combination with one or more features of the various embodiments described above or below, the alginate has an average molecular weight from 10 to 500 kg/mol, more particularly from 60 to 380 kg/mol, and even more particularly from 100 to 300 kg/mol.

According to another embodiment, optionally in combination with one or more features of the various embodiments described above or below, the chitosan has a viscosity from 50 to 900 mPa·s, more particularly from 400 to 800 mPa·s measured at 1 wt% aqueous solution, 20 °C, 20 rpm.

Examples of commercial alginate derivatives which may be used in the formulation of the invention include sodium alginate Type NA7580 (C.E. Roeper GmbH, Article: 10324), sodium alginate Type NA5030 (C.E. Roeper GmbH, Article: 10323), sodium alginate Type NA4012 (C.E. Roeper GmbH, Article: 10322), sodium alginate Type NA3545 (C.E. Roeper GmbH, Article: 10321), or sodium alginate Type NA1080HG with viscosity (C.E. Roeper GmbH, Article: 10739).

As mentioned above, the components of the formulation of the invention are interconnected by different kinds of interactions, which results in a stable formulation and allows enhancing the copper deposition on the leaves.

On the one hand, in the formulation of the invention, the cationic polymer is bonded to the anionic polymer by ionic bonds formed between quaternary ammonium groups of the cationic polymer and carboxylate or sulfonate groups of the anionic polymer. Furthermore, the copper cations dissolved in the aqueous medium are coordinated to amino groups and hydroxyl groups of the cationic polymer. Additionally, the copper cations dissolved in the aqueous medium are bonded to the carboxylate groups or sulfonate groups of the anionic polymer the anionic polymer by ionic bonds. And finally, the copper cations present in the microcapsule wall are bonded to the anionic polymer by ionic bonds formed between cooper cations and carboxylate groups or sulfonate groups of the anionic polymer.

According to one embodiment, optionally in combination with one or more features of the various embodiments described above or below, the weight ratio between the cationic polymer and the anionic polymer is from 1:3 to 2:1, more particularly from 2:3 to 4:3.

According to another embodiment, optionally in combination with one or more features of the various embodiments described above or below, the weight amount of the microcapsules with respect the total formulation weight is from 0.01 to 1.0%, more particularly from 0.1 to 0.36%.

According to another embodiment, optionally in combination with one or more features of the various embodiments described above or below, the weight amount of anionic polymer, particularly alginate, with respect the total microcapsule wall weight is from 60 to 95%, more particularly from 60 to 80%.

According to another embodiment, optionally in combination with one or more features of the various embodiments described above or below, the total weight amount of copper cations, that is, copper cations dissolved in the aqueous medium and copper cations present in the microcapsule wall, with respect the total formulation weight is from 0.01 to 0.4%, more particularly from 0.01 to 0.09%.

According to another embodiment, optionally in combination with one or more features of the various embodiments described above or below, the total weight amount of copper cations in the formulation, that is copper cations dissolved in the aqueous medium and copper cations present in the microcapsule wall, with respect the total microcapsule wall weight is from 5 to 40%, more particularly from 5 to 25%.

The formulation of the invention may include surfactants (also referred herein to as wetting agents) to further increase its spreading and penetrating abilities. Therefore, according to one embodiment, optionally in combination with one or more features of the various embodiments described above or below, the formulation further comprises one or more surfactants dissolved in the aqueous medium.

The term "surfactant" or "wetting agent" as used herein refers to a component which lowers the surface tension between a liquid and a solid. Surfactants have a hydrophobic part and a hydrophilic part. Surfactants can be classified as non-ionic when the hydrophilic part is polar but has no charge, anionic when the hydrophilic part contains a negatively charged group, cationic when the hydrophilic part contains a positively charged group or zwitterionic when the hydrophilic part contains both cationic and anionic groups.

In one particular embodiment, optionally in combination with one or more features of the various embodiments described above or below, the one or more surfactants of the formulation are non-ionic surfactants. Non-limiting examples of surfactants include polyglycerolesters, phospholipids, polyglycosides ((C₈-C₁₄)alkyl polyglycosides), alkylene oxide esters of (C₈-C₃₀)fatty acids, alkylene oxide ethers of (C₈-C₃₀)fatty alcohols, sugar esters and polyesters, alkoxylated sugar esters and polyesters, alkyl phosphates, polyoxyalkylene fatty ether phosphates, fatty acid amides, acyl lactylates, polyether siloxanes, acetylenic diol ethylene oxide/propylene oxide adducts, and mixtures thereof.

Polyether siloxanes contain both polyether chains (derived from ethylene oxide or propylene oxide) and chains of repeating dialkyl siloxane units. A particular example of polyether siloxanes are polyether trisiloxanes, which have the general formula:

Me₃SiO-Si(Me)(R)-OSiMe₃

where the radical R is a polyether radical comprising ethylene oxide and/or propylene oxide chains.

Acetylenic diol ethylene oxide/propylene oxide adducts have the formula: 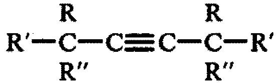 where R is methyl, R' is isobutyl and R" is OH or (-O-CH2-CH2)x-OH.

According to one embodiment, optionally in combination with one or more features of the various embodiments described above or below, the formulation further comprises one surfactant dissolved in the aqueous medium, more particularly a polyether siloxane or an acetylenic diol ethylene oxide/propylene oxide adducts, and even more particularly a polyether trisiloxane.

Examples of commercial polyether trisiloxanes include BREAK-THRU^{®} S 301 (Evonic), TEGOPREN^{®} 5840 (Evonic), BREAK-THRU^{®} SP 133 (Evonic), SURFYNOL^{®}440 (2,4,7,9-tetramethyl-5-decyne-4,7-diol ethoxylate, Evonic).

If desired, the microcapsules of the invention may comprise further components in the wall also forming part of the network such as for example, one or more cross-linkers. The use of cross-linking agents may even improve the mechanical strength of the microcapsule by ionically interacting with the anionic polymer of the microcapsule, in particular with the negatively charged groups of the anionic polymer. Multivalent metallic cations, and particularly divalent cations, in the form of a salt may be used as cross-linking agents. Non-limiting examples of cross-linking agents which may be used include multivalent metallic cations and particularly divalent cations such as salts of calcium (Ca²⁺), magnesium (Mg²⁺), iron (Fe²⁺), and zinc (Zn²⁺). Any salts of these cations may be used provided that it is soluble.

In an embodiment, optionally in combination with one or more features of the various embodiments described above or below, the wall of the microcapsule further comprises one or more cross-linking agents, more particularly one cross-linking agent selected from the group consisting of Ca²⁺, Mg²⁺, Fe²⁺, and Zn²⁺, and even more particularly the weight amount of cross-linking agents with respect the total formulation weight is from 0.006 to 0.018 %, more particularly from 0.006 to 0.010%. The above-mentioned cations may be present in the form of a chloride, phosphate, carbonate, oxalate, or sulfate salt.

The formulation of the invention can also be used for delivering further active ingredients apart from copper. These active ingredients can be conveniently encapsulated in the polymeric microcapsules of the formulation, such that a controlled and sustained delivery of these active ingredients may be obtained. Thus, in one embodiment, optionally in combination with one or more features of the various embodiments described above or below, the microcapsules comprise one or more agriculturally active ingredients which are encapsulated inside the microcapsules. More particularly, the agriculturally active ingredients are selected from the group consisting of insect repellents, insect sex pheromones, plant growth promoters, fertilizers, fungicides, probiotics, enzymes, biocides, polyphenols, biologically active compounds (bio-effectors) extracted from plants or pomace, and a combination thereof.

In one embodiment, optionally in combination with one or more features of the various embodiments described above or below, the microcapsules comprise polyphenols which are encapsulated inside the microcapsules. More particularly, the polyphenol weight amount, with respect the total microcapsule weight is from 0.01 to 5%, more particularly from 0.01 to 0.5%.

Polyphenols are phenolic substances which possess an aromatic ring bearing one or more hydroxyl groups. Polyphenols include phenolic acids, and flavonoids.

Polyphenols may be extracted from cereals and legumes, oilseeds and fruits, vegetables, and beverages such as fruit juices, tea, coffee, cocoa, beer, and wine.

Phenolic acids include cinnamic acids, such as coumaric acid, caffeic acid, ferulic acid, chlorogenic acid, and neochlorogenic acid; and benzoic acids, such as p-hydroxybenzoic acid, protocatechuic acid, vanillic acid, and gallic acid. Flavonoids include catechin (C), epicatechin (EC), gallocatechin (GC), gallocatechin gallate (GCG), epigallocatechin (EGC), epicatechin gallate (ECg), and epigallocatechin gallate (EGCg). Flavonoids include anthocyanidins, anthoxanthins, flavanones, flavanonols, flavans, and isoflavonoids Flavanones such as quercetin), and red and blue anthocyanins.

An example of a polyphenol extract that may be encapsulated in the polymeric microcapsules is Vitaflavan (ref: OC-DRT-16-02900). Vitaflavan^{®} is a grape seed extract which contains oligomeric proanthocyanidins (OPC) catechin and epicatechin.

On the other hand, the formulation of the invention can also comprise one or more further agriculturally acceptable carriers. The term "agriculturally acceptable carrier" as used herein refers to a carrier that is not unacceptably damaging to a plant or its environment, and/or not unsafe to the user or others that may be exposed to the material when used as described herein. Examples of such carriers include, without limitation, bio-inocula, solvents such as alcohols including ethanol or isopropanol, glycols such as propylene glycol or butylene glycol, and silicones and waxes; adjuvants, dispersants, surfactants, binders, or stabilizers.

According to one embodiment, optionally in combination with one or more features of the various embodiments described above or below, the invention relates to a formulation comprising:
a) an aqueous medium in the pH range from 4.0 to 6.5;
b) a cationic polymer dissolved in the aqueous medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium;
d) one or more surfactants dissolved in the aqueous medium; and
e) microcapsules dispersed in the aqueous medium, wherein the microcapsule wall forms a network which comprises an anionic polymer and a plurality of copper cations, the anionic polymer comprises a plurality of carboxylate groups or sulfonate groups, and the microcapsule has a particle size distribution D90 from 2 to 80 µm;
wherein:
the cationic polymer is bonded to the anionic polymer by ionic bonds formed between quaternary ammonium groups of the cationic polymer and carboxylate or sulfonate groups of the anionic polymer,
the copper cations dissolved in the aqueous medium are coordinated to amino groups and hydroxyl groups of the cationic polymer,
the copper cations dissolved in the aqueous medium are bonded to the anionic polymer by ionic bonds with the carboxylate groups or sulfonate groups of the anionic polymer, and
the copper cations present in the microcapsule wall are bonded to the anionic polymer by ionic bonds formed between cooper cations and carboxylate groups or sulfonate groups of the anionic polymer.

More particularly, in the above embodiment, the cationic polymer is chitosan, the anionic polymer is alginate, and the copper cations dissolved in the aqueous medium are coordinated to hydroxyl groups of the chitosan. Also more particularly, the surfactant is a polyether trisiloxane or an acetylenic diol ethylene oxide/propylene oxide adduct.

In another embodiment, optionally in combination with one or more features of the various embodiments described above or below, the invention relates to a formulation comprising:
a) an aqueous medium in the pH range from 4.0 to 6.5;
b) a cationic polymer dissolved in the aqueous medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium; and
d) microcapsules dispersed in the aqueous medium, wherein the microcapsule wall forms a network which comprises an anionic polymer and a plurality of copper cations, the microcapsules comprise one or more agriculturally active ingredients which are encapsulated inside the microcapsules, the anionic polymer comprises a plurality of carboxylate groups or sulfonate groups, and the microcapsule has a particle size distribution D90 from 2 to 80 µm;
wherein:
the cationic polymer is bonded to the anionic polymer by ionic bonds formed between quaternary ammonium groups of the cationic polymer and carboxylate or sulfonate groups of the anionic polymer,
the copper cations dissolved in the aqueous medium are coordinated to amino groups and hydroxyl groups of the cationic polymer,
the copper cations dissolved in the aqueous medium are bonded to the anionic polymer by ionic bonds with the carboxylate groups or sulfonate groups of the anionic polymer, and
the copper cations present in the microcapsule wall are bonded to the anionic polymer by ionic bonds formed between cooper cations and carboxylate groups or sulfonate groups of the anionic polymer.

In another embodiment, optionally in combination with one or more features of the various embodiments described above or below, the invention relates to a formulation comprising:
a) an aqueous medium in the pH range from 4.0 to 6.5;
b) a cationic polymer dissolved in the aqueous medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium;
d) one or more surfactants dissolved in the aqueous medium; and
e) microcapsules dispersed in the aqueous medium, wherein the microcapsule wall forms a network which comprises an anionic polymer and a plurality of copper cations, the microcapsules comprise one or more agriculturally active ingredients which are encapsulated inside the microcapsules, the anionic polymer comprises a plurality of carboxylate groups or sulfonate groups, and the microcapsule has a particle size distribution D90 from 2 to 80 µm;
wherein:
the cationic polymer is bonded to the anionic polymer by ionic bonds formed between quaternary ammonium groups of the cationic polymer and carboxylate or sulfonate groups of the anionic polymer,
the copper cations dissolved in the aqueous medium are coordinated to amino groups and hydroxyl groups of the cationic polymer,
the copper cations dissolved in the aqueous medium are bonded to the anionic polymer by ionic bonds with the carboxylate groups or sulfonate groups of the anionic polymer, and
the copper cations present in the microcapsule wall are bonded to the anionic polymer by ionic bonds formed between cooper cations and carboxylate groups or sulfonate groups of the anionic polymer.

The formulation of the invention has the advantage that can be conveniently applied to the targeted crop for example thanks to its adequate viscosity. In one embodiment, optionally in combination with one or more features of the various embodiments described above or below, the formulation is a spray.

As previously mentioned, after evaporation of the formulation's water content, the size of the dried droplet ranged from 0.02 to 2.5 mm measured by means of optical microscopy. Thus, the invention also relates to the dried formulation droplet obtainable after evaporation of the formulation's water content. According to another embodiment, optionally in combination with one or more features of the various embodiments described above or below, the dried formulation droplet is from 0.02 to 2.5 mm, more particularly from 0.04 to 0.9 mm, measured by means of optical microscopy.

According to another embodiment, optionally in combination with one or more features of the various embodiments described above or below, the formulation has a viscosity from 1.50 to 2.50 mPa·s, more particularly from 1.7 to 2.40 mPa·s, and even more particularly from 1.80 to 2.20 mPa·s, as measured by of IKA Rotavisc lo-vi, spindle VOL-SP-6.7, rpm 200.

As used herein, "viscosity" refers to a measure of the resistance of a fluid to deform under shear stress and describe the fluid's internal resistance to flow and can be measured as a function of the shear rate by using a rheometer. It is generally expressed in miliPascal seconds (mPa·s).

### Preparation processes

The present invention also relates to a process for the preparation of the formulation as defined herein, which comprises:
i) providing an aqueous solution comprising a polymer which comprises a plurality of carboxylic acid groups or sulfonic acid groups, wherein in solution the polymer is in anionic form and comprises a plurality of carboxylate groups or sulfonate groups;
ii) providing an aqueous solution of a copper salt, wherein in solution the copper salt is in ionic form;
iii) providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
   wherein steps i), ii) and iii) are carried out in any order;
iv) spraying the solution of step i) onto the solution of step ii) to obtain a mixture comprising microcapsules having a particle size distribution D90 from 2 to 80 µm, and wherein the microcapsule wall forms a network which comprises the anionic polymer and a plurality of copper cations;
v) adding the solution of step iii) onto the mixture of step iv) to obtain a formulation in which the microcapsules are dispersed; and
vi) if needed, adjusting the pH of the formulation until the pH is in the range from 4.0 to 6.5.

In one embodiment, optionally in combination with one or more features of the various embodiments described above or below, steps i), ii) and iii) are carried out under stirring e.g. at 500 rpm, for and appropriate time period, e.g. for 24 h, and in particular at room temperature.

In step ii) a copper salt is solubilised in water. There is no limitation in the copper salt that can be used provided that it is soluble in water. Non-limiting examples of copper salts that may be used in step ii) include for example copper chloride, copper phosphate, copper carbonate, copper oxalate, or copper sulfate.

In step iii) the cationic polymer is dissolved in an acid medium. There is no limitation in the medium that can be used provided that it solubilizes the cationic polymer by forming an acid salt. Non-limiting examples of acids that may be used in step i) include for example acetic acid, lactic acid, hydrochloric acid, glycolic acid and glutamic acid.

In one embodiment, optionally in combination with one or more features of the various embodiments described above or below, the concentration of the polymer in step iii) is from 0.2 to 1% by weight with respect to the total weight of the aqueous solution of step iii), more particularly from 0.25 to 0.5%.

In one embodiment, optionally in combination with one or more features of the various embodiments described above or below, step iv) comprises using spray or nozzle (SU1ASS nozzle provided by *Spraying System Spain S.L*.) technology capable of providing microcapsules having a particle size distribution D90 from 2 to 80 µm. More particularly step iv) is carried out under stirring e.g. at 500 rpm, for and appropriate time period, e.g. for 24 h, and in particular at room temperature.

In one embodiment, optionally in combination with one or more features of the various embodiments described above or below, step v) is carried out under stirring e.g. at 500 rpm and left for and appropriate time period, e.g. for 1 h, and in particular at room temperature.

In step vi), if needed, the pH of the formulation is adjusted until the pH is in the range from 4.0 to 6.5. This can be done by adding a base such as for example sodium hydroxide, sodium carbonate, sodium bicarbonate, or adding an acid including an organic acid such as formic acid, acetic acid, propionic acid, lactic acid, citric acid and succinic acid, or an inorganic acid such as hydrochloric acid, phosphoric acid, and nitric acid.

In one embodiment, optionally in combination with one or more features of the various embodiments described above or below, when the formulation of the invention further comprises one or more surfactants dissolved in the acid medium, the process comprises:
i') providing an aqueous solution comprising a polymer which comprises a plurality of carboxylic acid groups or sulfonic acid groups, wherein in solution the polymer is in anionic form and comprises a plurality of carboxylate groups or sulfonate groups;
ii') providing an aqueous solution of a copper salt, wherein in solution the copper salt is in ionic form;
iii') providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
iv') providing an aqueous solution of one or more surfactants;
wherein steps i'), ii'), iii') and iv') are carried out in any order;
v') spraying the solution of step i') onto the solution of step ii') to obtain a mixture comprising microcapsules having a particle size distribution D90 from 2 to 80 µm, and wherein the microcapsule wall forms a network which comprises the anionic polymer and a plurality of copper cations;
vi') adding the solution of step iii') onto the mixture of step v'); and
vii') adding the solution of step iv') onto the mixture of step vi') to obtain a formulation in which the microcapsules are dispersed; and
viii') if needed, adjusting the pH of the formulation until the pH is in the range from 4.0 to 6.5.

The features and embodiments disclosed for steps i), ii), and iii) above also apply to steps i'), ii'), and iii'), respectively, and the features and embodiments disclosed for steps iv), v), and vi) above also apply to steps v') ,vi') and viii'); respectively.

In one embodiment, optionally in combination with one or more features of the various embodiments described above or below, step iv') is carried out under stirring e.g. at 500 rpm, for and appropriate time period, e.g. for 1 h, and in particular at room temperature.

In one embodiment, optionally in combination with one or more features of the various embodiments described above or below, step vii') is carried out under stirring e.g. at 500 rpm, for and appropriate time period, e.g. for 1 h, and in particular at room temperature.

In another embodiment, optionally in combination with one or more features of the various embodiments described above or below, when the formulation of the invention further comprises one or more agriculturally active ingredients encapsulated inside the microcapsules, the process comprises:
i") providing an aqueous mixture comprising a polymer which comprises a plurality of carboxylic acid groups or sulfonic acid groups and one or more agriculturally active ingredients, wherein in solution the polymer is in anionic form and comprises a plurality of carboxylate groups or sulfonate groups;
ii") providing an aqueous solution of a copper salt, wherein in solution the copper salt is in ionic form;
iii") providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
wherein steps i"), ii"), and iii") are carried out in any order;
iv") spraying the mixture of step i") onto the solution of step ii") to obtain a mixture comprising microcapsules having a particle size distribution D90 from 2 to 80 µm, and wherein the microcapsule wall forms a network which comprises the anionic polymer and a plurality of copper cations; and
v") adding the solution of step iii") onto the mixture of step iv") to obtain a formulation in which the microcapsules are dispersed; and
vi") if needed, adjusting the pH of the formulation until the pH is in the range from 4.0 to 6.5.

The features and embodiments disclosed for steps i), ii), and iii) above also apply to steps i"), ii"), and iii"), respectively, and the features and embodiments disclosed for steps iv), v), and vi) above also apply to steps iv"), v"), and vi"); respectively.

In another embodiment, optionally in combination with one or more features of the various embodiments described above or below, when the formulation of the invention further comprises one or more surfactants dissolved in the acid medium and one or more agriculturally active ingredients encapsulated inside the microcapsules, the process comprises:
i‴) providing an aqueous mixture comprising a polymer which comprises a plurality of carboxylic acid groups or sulfonic acid groups and one or more agriculturally active ingredients, wherein in solution the polymer is in anionic form and comprises a plurality of carboxylate groups or sulfonate groups;
ii‴) providing an aqueous solution of a copper salt, wherein in solution the copper salt is in ionic form;
iii‴) providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
iv‴) providing an aqueous solution of one or more surfactants;
wherein steps i‴), ii‴), iii‴) and iv‴) can be carried out in any order;
v‴) spraying the mixture of step i‴) onto the solution of step ii‴) to obtain a mixture comprising microcapsules having a particle size distribution D90 from 2 to 80 µm, and
wherein the microcapsule wall forms a network which comprises the anionic polymer and a plurality of copper cations;
vi‴) adding the solution of step iii‴) onto the mixture of step v‴); and
vii‴) adding the solution of step iv‴) onto the mixture of step vi") to obtain a formulation in which the microcapsules are dispersed; and
viii‴) if needed, adjusting the pH of the formulation until the pH is in the range from 4.0 to 6.5.

The features and embodiments disclosed for steps i), ii), and iii) above also apply to steps i‴), ii‴), and iii‴), respectively; the features and embodiments disclosed for steps iv), v), and vi) above also apply to steps v‴), vi‴), and viii‴), respectively; the features and embodiments disclosed for steps iv') and vii') above also apply to steps iv‴) and vii‴).

The formulation of the invention may be defined by its preparation process. Thus, it also forms part of the invention a formulation as defined in the first aspect, which is obtainable by a process which comprises:
i) providing an aqueous solution comprising a polymer which comprises a plurality of carboxylic acid groups or sulfonic acid groups, wherein in solution the polymer is in anionic form and comprises a plurality of carboxylate groups or sulfonate groups;
ii) providing an aqueous solution of a copper salt, wherein in solution the copper salt is in ionic form;
iii) providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
   wherein steps i), ii) and iii) are carried out in any order;
iv) spraying the solution of step i) onto the solution of step ii) to obtain a mixture comprising microcapsules having a particle size distribution D90 from 2 to 80 µm, and wherein the microcapsule wall forms a network which comprises the anionic polymer and a plurality of copper cations;
v) adding the solution of step iii) onto the mixture of step iv) to obtain a formulation in which the microcapsules are dispersed; and
vi) if needed, adjusting the pH of the formulation until the pH is in the range from 4.0 to 6.5.

In another embodiment, optionally in combination with one or more features of the various embodiments described above or below, the invention relates to a formulation as defined in the first aspect, further comprising one or more surfactants dissolved in the aqueous medium, which is obtainable by a process which comprises:
i') providing an aqueous solution comprising a polymer which comprises a plurality of carboxylic acid groups or sulfonic acid groups, wherein in solution the polymer is in anionic form and comprises a plurality of carboxylate groups or sulfonate groups;
ii') providing an aqueous solution of a copper salt, wherein in solution the copper salt is in ionic form;
iii') providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
iv') providing an aqueous solution of one or more surfactants;
wherein steps i'), ii'), iii') and iv') are carried out in any order;
v') spraying the solution of step i') onto the solution of step ii') to obtain a mixture comprising microcapsules having a particle size distribution D90 from 2 to 80 µm, and wherein the microcapsule wall forms a network which comprises the anionic polymer and a plurality of copper cations;
vi') adding the solution of step iii') onto the mixture of step v'); and
vii') adding the solution of step iv') onto the mixture of step vi') to obtain a formulation in which the microcapsules are dispersed; and
viii') if needed, adjusting the pH of the formulation until the pH is in the range from 4.0 to 6.5.

In another embodiment, optionally in combination with one or more features of the various embodiments described above or below, the invention relates to a formulation as defined in the first aspect, further comprising one or more agriculturally active ingredients encapsulated inside the microcapsules, which is obtainable by a process which comprises:
i") providing an aqueous mixture comprising a polymer which comprises a plurality of carboxylic acid groups or sulfonic acid groups and one or more agriculturally active ingredients, wherein in solution the polymer is in anionic form and comprises a plurality of carboxylate groups or sulfonate groups;
ii") providing an aqueous solution of a copper salt, wherein in solution the copper salt is in ionic form;
iii") providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
wherein steps i"), ii"), and iii") are carried out in any order;
iv") spraying the mixture of step i") onto the solution of step ii") to obtain a mixture comprising microcapsules having a particle size distribution D90 from 2 to 80 µm, and wherein the microcapsule wall forms a network which comprises the anionic polymer and a plurality of copper cations; and
v") adding the solution of step iii") onto the mixture of step iv") to obtain a formulation in which the microcapsules are dispersed; and
vi") if needed, adjusting the pH of the formulation until the pH is in the range from 4.0 to 6.5.

In another embodiment, optionally in combination with one or more features of the various embodiments described above or below, the invention relates to a formulation as defined in the first aspect, further comprising one or more surfactants dissolved in the aqueous medium, and one or more agriculturally active ingredients encapsulated inside the microcapsules, which is obtainable by a process which comprises:
i‴) providing an aqueous mixture comprising a polymer which comprises a plurality of carboxylic acid groups or sulfonic acid groups and one or more agriculturally active ingredients, wherein in solution the polymer is in anionic form and comprises a plurality of carboxylate groups or sulfonate groups;
ii‴) providing an aqueous solution of a copper salt, wherein in solution the copper salt is in ionic form;
iii‴) providing an aqueous solution in the pH range from 4.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
iv‴) providing an aqueous solution of one or more surfactants;
wherein steps i‴), ii‴), iii‴) and iv‴) can be carried out in any order;
v‴) spraying the mixture of step i‴) onto the solution of step ii‴) to obtain a mixture comprising microcapsules having a particle size distribution D90 from 2 to 80 µm, and wherein the microcapsule wall forms a network which comprises the anionic polymer and a plurality of copper cations;
vi‴) adding the solution of step iii‴) onto the mixture of step v‴);
vii‴) adding the solution of step iv‴) onto the mixture of step vi") to obtain a formulation in which the microcapsules are dispersed; and
viii‴) if needed, adjusting the pH of the formulation until the pH is in the range from 4.0 to 6.5.

For the purposes of the invention, the expressions "obtainable", "obtained" and similar equivalent expressions are used interchangeably and, in any case, the expression "obtainable" encompasses the expression "obtained". All the embodiments disclosed herein for the formulation and the preparation process apply also for the formulation obtainable by this process.

### Applications

As disclosed above, the formulation of the invention allows delivering copper cations to the plant in an effective manner. Thus, the present invention also relates to the use of the formulation as defined herein as a delivery system of copper in agricultural applications.

The formulation of the present invention may be applied directly to the leaves of a plant to control bacterial or fungal diseases. Accordingly, it also forms part of the invention the use formulation as defined herein for preventing or reducing the damage of diseases caused by pathogenic fungi or bacteria in agricultural crops.

There is no limitation on the type of crop provided that the antifungal or antibacterial effect of copper is applicable. Non-limiting examples of crops where the formulation of the invention may be applied include for example grapefruit, lemon, lime, orange, alfalfa, oats, peanuts, potatoes, wheat, barley, blackberry, cranberry, raspberry, strawberry, apple, apricot, banana, cherry, mango, nectarine, olive, peach, pear, plum, beans, broccoli, brussel sprout, cabbage, carrot, cauliflower, cucumber, eggplant, onions, peas, peppers, pumpkin, tomato and watermelon, and vines such as grape.

According to one embodiment, optionally in combination with one or more features of the various embodiments described above or below, the invention relates to the use formulation as defined herein for preventing or reducing the damage of diseases caused by pathogenic fungi or bacteria in vineyards.

In another embodiment, optionally in combination with one or more features of the various embodiments described above or below, the diseases caused by pathogenic fungi or bacteria is selected from the group consisting of downy mildew, *phytophthora,* powdery mildew, Bacterial leaf spot (including *Erwina* sp., *Pseudomonas* sp., *Pseudomonas cichorii, Xanthomonas* sp.), *Alternaria,* Cercospora leaf blight, Alternaria twig blight, *Botrytis* blight, *Cercospora* leaf spot, *Phytophthora* dieback, Anthracnose, *Pseudomonas* leaf spot, *Alternaria* blight, *Septoria* leaf spot, *Alternaria* leaf spot, *Botrytis* gray mold, *Pestalotia* leaf spot, Bacterial spot, Bacterial soft rot, *Xanthomonas* leaf spot, *Botrytis* bud rot, Bacterial leaf blight, *Entomosporium* leaf spot, *Entomosporium maculata, Colletotrichum* sp., Algal leaf spot (*Cephaleuros virescens*), *Botrytis* leaf and flower rot, Fungal leaf spot, *Volutella* leaf blight, Fireblight leaf spot, *Phomopsis* stem blight, Fireblight scab, *Exosporium* leaf spot, *Phytophthora* bud rot, *Alternaria* flower spot, Powdery mildew Black spot.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention.

### Examples

### Example 1

In order to obtain the formulation containing microcapsules formed by copper-anionic polymer network and suspended in copper-cationic solution, 4 aqueous solutions were prepared separately:
- Solution A was prepared by dissolving 0.9 g of polyphenols extract (Vitaflavan, ref: OC-DRT-16-02900) and 90 g of sodium alginate Type NA7580 with Viscosity (1%, 20°C, 20 rpm) range 750-800 mPa·s (C.E. Roeper GmbH, Article: 10324) in 8.9 L of water. The mixture was stirred at 500 rpm during 24 h at room temperature (22±2 °C);
- Solution B containing 1 wt% CuSO₄, was prepared by dissolving 196.5 g of CuSO₄ · 5H₂O (Alfa Aesar, ref: A11262) in water until the final volume was 15 L. The mixture was stirred at 500 rpm during 24 h at room temperature (22±2 °C);
- Solution C was prepared by dissolving 125 g of crustacean chitosan (Sigma-Aldrich ref:417963, degree of deacetylation 94%) in the final volume of 25 L of acidified water which contained 125 ml of acetic acid (Merck, ref:1.01830). The mixture was stirred at 500 rpm during 24 h at room temperature (22±2 °C);
- Solution D was prepared by dissolving 50 g of wetting agent BREAK-THRU (Evonic, Type:BREAK-THRU^{®} S 301) in1 L of water. The mixture was stirred at 500 rpm during 1 h at room temperature (22±2 °C).

In order to get the final formulation, Solution A was first sprayed by a nozzle (Spraying Systems Spain S.L., ref: SU1A-SS) connected to compressed air (pressure 1 bar) into Solution B. Then, the formulation was agitated by a mechanical stirrer for 24h at room temperature (22±2 °C). Next, Solution C and Solution D were added, and the obtained final formulation was stirred for 1h at room temperature (22±2 °C). Then 0.01N NaOH solution was added dropwise added until the pH of the formulation reached the value 5. Then the formulation was stored in a plastic tank. The microcapsules diameter in the formulation was in the range of 2 - 80 µm. The final concentration of Cu²⁺ in the formulation was 1 g/L. The viscosity of the formulation was 2.14 mPa·s measured at 21 ± 2°C by means of IKA Rotavisc lo-vi, spindle VOL-SP-6.7, rpm 200.

### Example 2

The procedure was analogous to Example 1 except in that 234.6 g of CuSO₄ · 5H₂O were used instead of 196.5 g. The final concentration of Cu²⁺ in the formulation was 1.2 g/L.

The viscosity of the formulation was 2.10 mPa·s measured at 21 ± 2 °C by means of IKA Rotavisc lo-vi, spindle VOL-SP-6.7, rpm 200.

### Example 3

The procedure was analogous to Example 1 except in that 62.5 g of crustacean chitosan (Sigma-Aldrich ref:417963) were used instead of 125 g. The viscosity of the formulation was 1.89 mPa·s measured at 21 ± 2 °C by means of IKA Rotavisc lo-vi, spindle VOL-SP-6.7, rpm 200.

### Example 4

The procedure was analogous to Example 1, except in that sodium alginate Type NA5030 with Viscosity (1%, 20°C, 20 rpm) 50 mPa·s (C.E. Roeper GmbH, Article: 10323) was used instead of sodium alginate Type NA7580.

### Example 5

The procedure was analogous to Example 1, except in that sodium alginate Type NA4012 with Viscosity (1%, 20°C, 20 rpm) 400 mPa·s (C.E. Roeper GmbH, Article: 10322) was used instead of sodium alginate Type NA7580. The viscosity of the formulation was 2.17 mPa·s measured at 21 ± 2 °C by means of IKA Rotavisc lo-vi, spindle VOL-SP-6.7, rpm 200.

### Example 6

The procedure was analogous to Example 3, except in that sodium alginate Type NA4012 with Viscosity (1%, 20°C, 20 rpm) 400 mPa·s (C.E. Roeper GmbH, Article: 10322) was used instead of sodium alginate Type NA7580. The viscosity of the formulation was 1.87 mPa·s measured at 21 ± 2 °C by means of IKA Rotavisc lo-vi, spindle VOL-SP-6.7, rpm 200.

### Example 7

The procedure was analogous to Example 1, except in that sodium alginate Type NA3545 with Viscosity (1%, 20°C, 20 rpm) range 350-450 mPa·s (C.E. Roeper GmbH, Article: 10321) was used instead of sodium alginate Type NA7580. The viscosity of the formulation was 2.12 mPa·s measured at 21 ± 2°C by means of IKA Rotavisc lo-vi, spindle VOL-SP-6.7, rpm 200.

### Example 8

The procedure was analogous to Example 1, except in that sodium alginate Type NA1080HG with viscosity (1wt%, 20°C, 20 rpm) range 100-350 mPa·s (C.E. Roeper GmbH, Article: 10739) (C.E. Roeper GmbH, Article: 10739) was used instead of sodium alginate Type NA7580. The viscosity of the formulation was 2.14 mPa·s measured at 21 ± 2 °C by means of IKA Rotavisc lo-vi, spindle VOL-SP-6.7, rpm 200.

### Example 9

The procedure was analogous to Example 1, except in that crustacean chitosan (Aura Biotech, ref: C001; degree of deacetylation 85.3 %) with viscosity (1 wt% aqueous solution of chitosan, pH 3, 20 °C, 20 rpm) 18 mPa·s was used instead of crustacean chitosan (Sigma-Aldrich ref:417963). The viscosity of the formulation was 1.80 mPa·s measured at 21 ± 2 °C by means of IKA Rotavisc lo-vi, spindle VOL-SP-6.7, rpm 200.

### Example 10

The procedure was analogous to Example 1, except in that fungal chitosan (KitoZyme, ref: 104-19-03-V03) with viscosity (1 wt% aqueous solution of chitosan, pH 3, 20 °C, 20 rpm) 15 mPa·s was used instead of crustacean chitosan (Sigma-Aldrich ref:417963). The viscosity of the formulation was 1.98 mPa·s measured at 21 ± 2 °C by means of IKA Rotavisc lo-vi, spindle VOL-SP-6.7, rpm 200.

### Example 11

The procedure was analogous to Example 1 except in that 351.9 g of CuSO₄ · 5H₂O were used rather than 196.5 g. The final concentration of Cu²⁺ in the formulation was 1.8 g/L. The viscosity of the formulation was 2.13 mPa·s measured at 21 ± 2 °C by means of IKA Rotavisc lo-vi, spindle VOL-SP-6.7, rpm 200.

### Example 12

The procedure was analogous to Example 1 except in that 469.2 g of CuSO₄ · 5H₂O were used rather than 196.5 g. The final concentration of Cu²⁺ in the formulation was 2.4 g/L. The viscosity of the formulation was 2.19 mPa·s measured at 21 ± 2 °C by means of IKA Rotavisc lo-vi, spindle VOL-SP-6.7, rpm 200.

### Example 13

The procedure was analogous to Example 1 except in that the wetting agent TEGOPREN^{®} 5840 was used instead of BREAK-THRU^{®} S 301. The viscosity of the formulation was 2.14 mPa·s measured at 21 ± 2 °C by means of IKA Rotavisc lo-vi, spindle VOL-SP-6.7, rpm 200.

### Example 14

The procedure was analogous to Example 1 except in that the wetting agent BREAK-THRU^{®} SP 133 was used instead of BREAK-THRU^{®} S 301. The viscosity of the formulation was 2.15 mPa·s measured at 21 ± 2 °C by means of IKA Rotavisc lo-vi, spindle VOL-SP-6.7, rpm 200.

### Example 15

The procedure was analogous to Example 1 except in that the wetting agent SURFYNOL^{®}440 was used instead of BREAK-THRU^{®} S 301. The viscosity of the formulation was 2.15 mPa·s measured at 21 ± 2 °C by means of IKA Rotavisc lo-vi, spindle VOL-SP-6.7, rpm 200.

### Example 16

The procedure was analogous to Example 2 except in that copper (II) chloride dihydrate 160.9 g of CuCl₂ · 2H₂O (Fisher scientific, cod C/7920/65) was used instead of 234.6 g of CuSO₄ · 5H₂O. The final concentration of Cu²⁺ in the formulation was 1.2 g/L. The viscosity of the formulation was 2.16 mPa·s measured at 21 ± 2 °C by means of IKA Rotavisc lo-vi, spindle VOL-SP-6.7, rpm 200.

### Comparative Example 17

Commercially available aqueous solution containing 1 g/L of Cu²⁺ was prepared using Ossirame 50wp (product registration number 24.808) following instructions provided by Manica Cobre, Spain.

### Assay of cooper deposition

The test formulation was deposited on twelve copper collector papers (FANOIA quantitative filter paper, cod. HK1238/30-80, 24 cm² area) fixed on an artificial vineyard, of 1.2 m long and 0.6 m high. This vineyard was sited to a 0.5 m of height from ground. In order to cover all the surfaces of the artificial vineyard, the collector papers were located at three different levels (low, medium, and high) with respect of the ground. It means that four papers were located at 0.5 m high, other four papers at 0.8 m high, and finally four papers at 1.1 m. The distance between the collector papers in the same row was approximately 20 cm.

The formulation depositions on the collector papers were carried out by means of a manual spray bag MATABI Evolution 16. This bag was connected with a set of four ISO 110-025 (TEEJET) nozzles located along a spray boom of 2 meters long. It means that each nozzle was located in a distance of 50 centimetres along the spray boom. The test formulation was sprayed with the speed of 1 m/s at 3 bars of pressure. The distance application between the nozzles and the collector papers was approximately 50 cm.

The collector papers with deposited formulation were picked up to analyse the copper content. It was measured by pouring the paper into 25 mL of 0.05 N of a solution of HNO₃ for 5 minutes. Then the remained acidic solution containing the copper cations was analysed by means of atomic absorption spectrometer (SpectrAA-110, Varian, Inc. USA).

In the table below, the amount of copper cations deposited on the collector papers for several formulations is shown:

| **Test formulation** | **Copper cations deposited on the collector papers (µg/cm²)** |
|---|---|
| Example 1 | 0.061 ± 0.017 |
| Comparative Example 17 | 0.034 ± 0.013 |
| Example 5 | 0.047 ± 0.013 |
| Example 3 | 0.057 ± 0.021 |
| Example 6 | 0.063 ± 0.019 |
| Example 9 | 0.053 ± 0.019 |
| Example 10 | 0.049 ± 0.026 |

The statistical treatment of the above experimental data allowed to conclude that the differences observed between the formulations of the invention and the commercial formulation, in the sense that the copper deposition was increased by the formulations of the invention, were statistically significant.

### Assessment of the size of the dried formulation droplet

### Method A:

The procedure of the formulation deposition was the same as indicated in the assay of cooper deposition, however plastic Petri dishes (DELTALAB) attached to the artificial vineyard were used instead of collector papers. In this experiment the copper content analysed was not performed but optical visualization of the deposited formulation was investigated by means of optical microscope. In this experiment the deposition of the formulation was sprayed horizontally to the Petri dish.

### Method B:

The procedure of the formulation deposition was the same as indicated in the assay of cooper deposition, however plastic Petri dishes (DELTALAB) were put on the ground instead of being attached to the artificial vineyard. Optical visualization of the deposited formulation was investigated by means of optical microscope. In this experiment the deposition of the formulation was sprayed vertically to the Petri dish.

In the table below, the size of the dried formulation droplet for several formulations is shown:

| **Test formulation** | **Method** | **Size of the dried formulation droplet (µm)** |
|---|---|---|
| Example 1 | A | 187 - 828 |
| Example 1 | B | 402 - 758 |
| Example 6 | A | 253 - 837 |
| Example 6 | B | 227 - 889 |
| Example 3 | A | 382 - 1403 |
| Example 3 | B | 473 - 943 |
| Example 5 | A | 265 - 1002 |
| Example 5 | B | 701 - 1884 |

The above data demonstrated the good spreadability of the formulation of the invention on the leave. Further, it was observed that this size was not dependent on the direction of the spraying system used to apply the formulation to the plant.

## Claims

1. A formulation comprising:
a) an aqueous medium in the pH range from 4.0 to 6.5;
b) a cationic polymer dissolved in the aqueous medium, wherein the cationic polymer comprises a plurality of quaternary ammonium groups, amino groups, and hydroxyl groups, and the concentration of the cationic polymer is from 0.0001 to 0.5% by weight with respect to the total weight of the formulation;
c) a plurality of copper cations dissolved in the aqueous medium; and
d) microcapsules dispersed in the aqueous medium, wherein the microcapsule wall forms a network which comprises an anionic polymer and a plurality of copper cations, the anionic polymer comprises a plurality of carboxylate groups or sulfonate groups, and the microcapsule has a particle size distribution D90 from 2 to 80 µm;
wherein:
the cationic polymer is bonded to the anionic polymer by ionic bonds formed between quaternary ammonium groups of the cationic polymer and carboxylate or sulfonate groups of the anionic polymer,
the copper cations dissolved in the aqueous medium are coordinated to amino groups and hydroxyl groups of the cationic polymer,
the copper cations dissolved in the aqueous medium are bonded to the anionic polymer by ionic bonds with the carboxylate groups or sulfonate groups of the anionic polymer, and
the copper cations present in the microcapsule wall are bonded to the anionic polymer by ionic bonds formed between cooper cations and carboxylate groups or sulfonate groups of the anionic polymer.

2. The formulation according to claim 1, wherein the cationic polymer is selected form the group consisting of chitosan, N,O-carboxymethylchitosan, N,O-glycolic-chitosan, poly-L-lysine, and a combination thereof.

3. The formulation according to any of the claims 1-2, wherein the anionic polymer of the microcapsule wall is selected form the group consisting of alginate, carrageenan, gellan gum, carboxyl methyl cellulose, hyaluronic acid, and a combination thereof.

4. The formulation according to any of the claims 1-3, wherein the cationic polymer is chitosan, and the anionic polymer is alginate.

5. The formulation according to any of the claims 1-4, wherein the weight amount of anionic polymer with respect the total microcapsule wall weight is from 60 to 95%.

6. The formulation according to any of the claims 1-5, wherein the weight ratio between the cationic polymer and the anionic polymer is from 2:3 to 4:3.

7. The formulation according to any of the claims 1-6, wherein the total weight amount of copper cations in the formulation with respect the total microcapsule wall weight is from 5 to 40%.

8. The formulation according to any of the claims 1-7, which further comprises one or more surfactants dissolved in the aqueous medium.

9. The formulation according to claim 8, wherein the weight amount of surfactant with respect the total formulation weight is from 0.01 to 2.0%.

10. The formulation according to any of the claims 1-9, which has a viscosity from 1.50 to 2.50 mPa·s.

11. The formulation according to any of the claims 1-10, wherein the microcapsules comprise one or more agriculturally active ingredients which are encapsulated inside the microcapsules, wherein the agriculturally active ingredients are selected from the group consisting of insect repellents, insect sex pheromones, plant growth promoters, fertilizers, fungicides, probiotics, enzymes, biocides, polyphenols, biologically active compounds extracted from plants or pomace and a combination thereof.

12. The formulation according to any of the claims 1-11, which is a spray.

13. A process for preparing the formulation as defined in claim 1, which comprises:
i) providing an aqueous solution comprising a polymer which comprises a plurality of carboxylic acid groups or sulfonic acid groups, wherein in solution the polymer is in anionic form and comprises a plurality of carboxylate groups or sulfonate groups;
ii) providing an aqueous solution of a copper salt, wherein in solution the copper salt is in ionic form;
iii) providing an aqueous solution in the pH range from 3.0 to 6.5 comprising a polymer which comprises a plurality of amino groups and hydroxyl groups, wherein the concentration of the polymer is from 0.0001 to 0.5% by weight with respect to the total weight of the formulation, and wherein in solution the polymer is in cationic form and comprises a plurality of quaternary ammonium groups;
wherein steps i), ii) and iii) are carried out in any order;
iv) spraying the solution of step i) onto the solution of step ii) to obtain a mixture comprising microcapsules having a particle size distribution D90 from 2 to 80 µm, and wherein the microcapsule wall forms a network which comprises the anionic polymer and a plurality of copper cations;
v) adding the solution of step iii) onto the mixture of step iv) to obtain a formulation in which the microcapsules are dispersed; and
vi) if needed, adjusting the pH of the formulation until the pH is in the range from 4.0 to 6.5.

14. Use of the formulation as defined in any of the claims 1-12 as a delivery system of copper in agricultural applications.

15. Use of the formulation as defined in any of the claims 1-12 for preventing or reducing the damage of diseases caused by pathogenic fungi or bacteria in agricultural crops.

## Patentansprüche

1. Eine Formulierung, umfassend:
a) ein wässriges Medium im pH-Bereich von 4,0 bis 6,5;
b) ein kationisches Polymer, das in dem wässrigen Medium gelöst ist, wobei das kationische Polymer eine Vielzahl von quartären Ammoniumgruppen, Aminogruppen und Hydroxylgruppen umfasst und die Konzentration des kationischen Polymers von 0,0001 bis 0,5 Gew.- %, in Bezug auf das Gesamtgewicht der Formulierung, beträgt;
c) eine Vielzahl von Kupferkationen, die in dem wässrigen Medium gelöst sind; und
d) in dem wässrigen Medium dispergierte Mikrokapseln, wobei die Mikrokapselwand ein Netzwerk bildet, welches ein anionisches Polymer und eine Vielzahl von Kupferkationen umfasst, das anionische Polymer eine Vielzahl von Carboxylatgruppen oder Sulfonatgruppen umfasst und die Mikrokapsel eine Partikelgrößenverteilung D90 von 2 bis 80 µm aufweist;
wobei:
das kationische Polymer durch ionische Bindungen, die zwischen quartären Ammoniumgruppen des kationischen Polymers und Carboxylat- oder Sulfonatgruppen des anionischen Polymers gebildet werden, an das anionische Polymer gebunden ist,
die im wässrigen Medium gelösten Kupferkationen an Aminogruppen und Hydroxylgruppen des kationischen Polymers koordiniert sind,
die im wässrigen Medium gelösten Kupferkationen durch ionische Bindungen mit den Carboxylatgruppen oder Sulfonatgruppen des anionischen Polymers an das anionische Polymer gebunden sind, und
die in der Mikrokapselwand vorhandenen Kupferkationen durch ionische Bindungen, die zwischen Kupferkationen und Carboxylatgruppen oder Sulfonatgruppen des anionischen Polymers gebildet werden, an das anionische Polymer gebunden sind.

2. Die Formulierung nach Anspruch 1, wobei das kationische Polymer ausgewählt ist aus der Gruppe bestehend aus Chitosan, N,O-Carboxymethylchitosan, N,O-Glycol-Chitosan, Poly-L-Lysin und einer Kombination davon.

3. Die Formulierung nach einem der Ansprüche 1 bis 2, wobei das anionische Polymer der Mikrokapselwand ausgewählt ist aus der Gruppe bestehend aus Alginat, Carrageen, Gellangummi, Carboxylmethylcellulose, Hyaluronsäure und einer Kombination davon.

4. Die Formulierung nach einem der Ansprüche 1 bis 3, wobei das kationische Polymer Chitosan und das anionische Polymer Alginat ist.

5. Die Formulierung nach einem der Ansprüche 1 bis 4, wobei die Gewichtsmenge des anionischen Polymers in Bezug auf das Gesamtgewicht der Mikrokapselwand 60 bis 95 % beträgt.

6. Die Formulierung nach einem der Ansprüche 1 bis 5, wobei das Gewichtsverhältnis von dem kationischen Polymer zu dem anionischen Polymer 2:3 bis 4:3 beträgt.

7. Die Formulierung nach einem der Ansprüche 1 bis 6, wobei die gesamte Gewichtsmenge an Kupferkationen in der Formulierung in Bezug auf das Gesamtgewicht der Mikrokapselwand 5 bis 40 % beträgt.

8. Die Formulierung nach einem der Ansprüche 1 bis 7, welche ferner ein oder mehrere Tenside umfasst, die in dem wässrigen Medium gelöst sind.

9. Die Formulierung nach Anspruch 8, wobei die Gewichtsmenge des Tensids in Bezug auf das Gesamtgewicht der Formulierung von 0,01 bis 2,0 % beträgt.

10. Die Formulierung nach einem der Ansprüche 1 bis 9, welche eine Viskosität von 1,50 bis 2,50 mPa·s hat.

11. Die Formulierung nach einem der Ansprüche 1 bis 10, wobei die Mikrokapseln einen oder mehrere landwirtschaftliche Wirkstoffe umfassen, welche in den Mikrokapseln eingekapselt sind, wobei die landwirtschaftlichen Wirkstoffe ausgewählt sind aus der Gruppe bestehend aus Insektenabwehrmitteln, Insektensexpheromonen, Pflanzenwachstumsförderern, Düngemitteln, Fungiziden, Probiotika, Enzymen, Bioziden, Polyphenolen, biologisch aktiven Verbindungen, die aus Pflanzen oder Trestern extrahiert wurden, und einer Kombination davon.

12. Die Formulierung nach einem der Ansprüche 1 bis 11, welche ein Spray ist.

13. Ein Verfahren zur Herstellung der Formulierung wie in Anspruch 1 definiert, welches Folgendes umfasst:
i) bereitstellen einer wässrigen Lösung, die ein Polymer umfasst, welches eine Vielzahl von Carbonsäuregruppen oder Sulfonsäuregruppen umfasst, wobei das Polymer in Lösung in anionischer Form vorliegt und eine Vielzahl von Carboxylatgruppen oder Sulfonatgruppen umfasst;
ii) bereitstellen einer wässrigen Lösung eines Kupfersalzes, wobei das Kupfersalz in Lösung in ionischer Form vorliegt;
iii) bereitstellen einer wässrigen Lösung im pH-Bereich reichend von 3,0 bis 6,5, umfassend ein Polymer, welches eine Vielzahl von Aminogruppen und Hydroxylgruppen umfasst, wobei die Konzentration des Polymers 0,0001 bis 0,5 Gew.-%, in Bezug auf das Gesamtgewicht der Formulierung, beträgt und wobei das Polymer in Lösung in kationischer Form vorliegt und eine Vielzahl von quartären Ammoniumgruppen umfasst;
wobei die Schritte i), ii) und iii) in beliebiger Reihenfolge durchgeführt werden;
iv) aufsprühen der Lösung von Schritt i) auf die Lösung von Schritt ii), um eine Mischung zu erhalten, die Mikrokapseln mit einer Partikelgrößenverteilung D90 von 2 bis 80 µm umfasst, und wobei die Mikrokapselwand ein Netzwerk bildet, welches das anionische Polymer und eine Vielzahl von Kupferkationen umfasst;
v) Zugeben der Lösung aus Schritt iii) zu der Mischung aus Schritt iv), um eine Formulierung zu erhalten, in welcher die Mikrokapseln dispergiert sind; und
vi) bei Bedarf, einstellen des pH-Werts der Formulierung, bis der pH-Wert im Bereich von 4,0 bis 6,5 liegt.

14. Verwendung der Formulierung wie in einem der Ansprüche 1 bis 12 definiert als ein Abgabesystem für Kupfer in landwirtschaftlichen Anwendungen.

15. Verwendung der Formulierung wie in einem der Ansprüche 1 bis 12 definiert zur Verhinderung oder zur Verringerung der Schädigung durch Krankheiten, die durch pathogene Pilze oder Bakterien in landwirtschaftlichen Kulturen verursacht werden.

## Revendications

1. Une formulation comprenant :
a) un milieu aqueux dans la plage de pH de 4,0 à 6,5 ;
b) un polymère cationique dissous dans le milieu aqueux, dans lequel le polymère cationique comprend une pluralité de groupes ammonium quaternaire, de groupes amino et de groupes hydroxyle, et la concentration du polymère cationique est de 0,0001 à 0,5 % en poids par rapport au poids total de la formulation ;
c) une pluralité de cations de cuivre dissous dans le milieu aqueux ; et
d) des microcapsules dispersées dans le milieu aqueux, dans laquelle la paroi de la microcapsule forme un réseau qui comprend un polymère anionique et une pluralité de cations de cuivre, le polymère anionique comprend une pluralité de groupes carboxylate ou de groupes sulfonate, et la microcapsule a une distribution de taille des particules D90 allant de 2 à 80 µm ;
dans laquelle :
le polymère cationique est lié au polymère anionique par des liaisons ioniques formées entre des groupes ammonium quaternaire du polymère cationique et des groupes carboxylate ou sulfonate du polymère anionique,
les cations de cuivre dissous dans le milieu aqueux sont coordonnés aux groupes amino et aux groupes hydroxyle du polymère cationique,
les cations de cuivre dissous dans le milieu aqueux sont liés au polymère anionique par des liaisons ioniques avec les groupes carboxylate ou les groupes sulfonate du polymère anionique, et
les cations cuivre présents dans la paroi de la microcapsule sont liés au polymère anionique par des liaisons ioniques formées entre des cations de cuivre et des groupes carboxylate ou des groupes sulfonate du polymère anionique.

2. La formulation selon la revendication 1, dans laquelle le polymère cationique est choisi dans le groupe constitué par le chitosane, le N,O-carboxyméthylchitosane, le N,O-glycolique-chitosane, la poly-L-lysine et une combinaison de ceux-ci.

3. La formulation selon l'une quelconque des revendications 1 à 2, dans laquelle le polymère anionique de la paroi de la microcapsule est choisi dans le groupe constitué par l'alginate, le carraghénane, la gomme de gellane, la carboxyméthylcellulose, l'acide hyaluronique et une combinaison de ceux-ci.

4. La formulation selon l'une quelconque des revendications 1 à 3, dans laquelle le polymère cationique est le chitosane, et le polymère anionique est l'alginate.

5. La formulation selon l'une quelconque des revendications 1 à 4, dans laquelle la quantité en poids de polymère anionique par rapport au poids total de la paroi de la microcapsule est de 60 à 95 %.

6. La formulation selon l'une quelconque des revendications 1 à 5, dans laquelle le rapport pondéral du polymère cationique au polymère anionique est de 2:3 à 4:3.

7. La formulation selon l'une quelconque des revendications 1 à 6, dans laquelle la quantité totale en poids de cations de cuivre dans la formulation par rapport au poids total de la paroi de la microcapsule est de 5 à 40 %.

8. La formulation selon l'une quelconque des revendications 1 à 7, qui comprend en outre un ou plusieurs tensioactifs dissous dans le milieu aqueux.

9. La formulation selon la revendication 8, dans laquelle la quantité en poids de tensioactif par rapport au poids total de la formulation est de 0,01 à 2,0 %.

10. La formulation selon l'une quelconque des revendications 1 à 9, qui a une viscosité allant de 1,50 à 2,50 mPa.s.

11. La formulation selon l'une quelconque des revendications 1 à 10, dans laquelle les microcapsules comprennent un ou plusieurs ingrédients actifs sur le plan agricole qui sont encapsulés à l'intérieur des microcapsules, dans laquelle les ingrédients actifs sur le plan agricole sont choisis dans le groupe constitué des agents insectifuges, des phéromones sexuelles d'insectes, des promoteurs de croissance des plantes, des engrais, des fongicides, des probiotiques, des enzymes, des biocides, des polyphénols, des composés biologiquement actifs extraits de plantes ou de marc et une combinaison de ceux-ci.

12. La formulation selon l'une quelconque des revendications 1 à 11, où elle est un spray.

13. Un procédé de préparation de la formulation telle que définie dans la revendication 1, qui comprend :
i) fournir une solution aqueuse comprenant un polymère qui comprend une pluralité de groupes acide carboxylique ou de groupes acide sulfonique, dans lequel, en solution, le polymère est sous forme anionique et comprend une pluralité de groupes carboxylate ou de groupes sulfonate ;
ii) fournir une solution aqueuse d'un sel de cuivre, dans laquelle, en solution, le sel de cuivre est sous forme ionique ;
iii) fournir une solution aqueuse dans la plage de pH de 3,0 à 6,5 comprenant un polymère qui comprend une pluralité de groupes amino et de groupes hydroxyle, dans laquelle la concentration du polymère est de 0,0001 à 0,5 % en poids par rapport au poids total de la formulation, et dans laquelle, en solution, le polymère est sous forme cationique et comprend une pluralité de groupes ammonium quaternaire ;
dans lequel les étapes i), ii) et iii) sont mises en œuvre dans n'importe quel ordre ;
iv) pulvériser la solution de l'étape i) sur la solution de l'étape ii) pour obtenir un mélange comprenant des microcapsules ayant une distribution de taille des particules D90 de 2 à 80 µm, et dans lequel la paroi de la microcapsule forme un réseau qui comprend le polymère anionique et une pluralité de cations de cuivre ;
v) ajouter la solution de l'étape iii) sur le mélange de l'étape iv) pour obtenir une formulation dans laquelle les microcapsules sont dispersées ; et
vi) si nécessaire, ajuster le pH de la formulation jusqu'à ce que le pH soit dans la plage de 4,0 et 6,5.

14. Utilisation de la formulation telle que définie dans l'une quelconque des revendications 1 à 12 en tant que système d'administration de cuivre dans des applications agricoles.

15. Utilisation de la formulation telle que définie dans l'une quelconque des revendications 1 à 12 pour prévenir ou réduire les dommages produits par des maladies causées par des champignons ou des bactéries pathogènes dans les cultures agricoles.
